# FASCICULE DE BREVET EUROPEEN

(11) **EP 0 914 616 B1**
(45) Date de publication et mention de la délivrance du brevet: **03.03.2004**
(21) Numéro de dépôt: 97931853.2
(22) Date de dépôt: 03.07.1997
(51) Int. Cl.: G01P 3/44

(54) **MOYEU DE ROUE INCORPORANT PALIER DE ROULEMENT A JOINT D'ETANCHEITE A CODEUR INTEGRE**
RADNABE MIT WÄLZLAGER MIT EINER DICHTUNG MIT INTEGRIERTEM KODIERER
WHEEL HUB WITH ANTI-FRICTION BEARING HAVING A SEAL WITH A BUILT-IN ENCODER

(30) Priorité: 24.07.1996 FR 9609324
(43) Date de publication de la demande: 12.05.1999
(73) Titulaire: SNR ROULEMENTS, 74010 Annecy Cédex (FR)
(72) Inventeur: NICOT, Christophe, F-74330 Epagny (FR)
(74) Mandataire: Srour, Elie
(86) Numéro de dépôt international: PCT/FR1997/001186
(87) Numéro de publication internationale: WO 1998/003878

(56) Documents cités:
- EP-A- 0 323 789
- EP-A- 0 511 106
- EP-A- 0 607 719

## Description

L'invention concerne un palier de roulement dont le joint d'étanchéité intègre un dispositif codeur qui se déplace devant un dispositif capteur fixe. Elle concerne également un moyeu de roue incorporant un tel palier de roulement.

L'invention concerne plus particulièrement un palier de roulement dont le dispositif codeur est incorporé au joint d'étanchéité de manière à ce que le dispositif codeur affleure sensiblement dans le plan d'une face latérale du palier ou roulement. On connaît par les publications FR2625777 et FR2700588 de tels paliers dans lesquels, un dispositif capteur, disposé en regard du dispositif codeur, permet de mesurer la vitesse de rotation du palier.

En particulier, la publication FR2625777 décrit un dispositif capteur positionné, devant l'élément codeur intégré au joint d'étanchéité, par l'intermédiaire d'un support orientable de forme sensiblement annulaire. Ledit support est fixé sur une entretoise elle-même pincée entre les faces latérales extérieures de la bague fixe du palier et de l'épaulement du porte fusée. Ce montage présente l'inconvénient d'augmenter la largeur de voie du véhicule qui en est équipé. Par rapport au même véhicule non équipé du dispositif de captage de la vitesse de rotation, cela représente une augmentation totale de voie égale à deux fois l'épaisseur de l'entretoise. La position de chaque tambour de frein se trouve ainsi décalée, par rapport au plateau supportant les garnitures de frein ainsi que le dispositif hydraulique d'actionnement, d'une valeur égale à l'épaisseur de l'entretoise, en direction de l'extérieur du véhicule. La position du plateau, quant à elle, n'est pas modifiée par l'entretoise.

Le dispositif selon l'invention vise à palier cet inconvénient. A cet effet, l'invention concerne un palier de roulement constitué d'une bague extérieure montée, par l'intermédiaire de corps roulants autour d'une bague intérieure, l'un des joints d'étanchéité, qui assurent l'étanchéité du palier, intégrant un élément codeur solidaire en rotation de la bague extérieure et coopérant avec un élément capteur, ledit élément capteur étant fixé sur le porte-fusée, par l'intermédiaire de moyens de fixation, le palier étant caractérisé en ce que le joint d'étanchéité intégrant l'élément codeur comporte une armature qui possède une extension radiale s'étendant le long de la face latérale de la bague extérieure du palier, et en ce que l'épaisseur, selon l'axe du palier, de l'extension radiale de l'armature du joint d'étanchéité intégrant l'élément codeur, est égale au décalage axial introduit, entre le porte-fusée et la bague intérieure du palier de roulement, par les moyens de fixation de l'élément capteur sur ledit porte-fusée.

Le moyeu de roue selon l'invention permet de conserver le positionnement initial et standard du tambour de frein relativement au plateau sur lequel sont fixées les garnitures et évite ainsi toute modification du dispositif de freinage. En effet, le dispositif d'étanchéité du palier selon l'invention permet de compenser le décalage axial dudit palier, décalage lié au montage du bloc capteur sur une entretoise.

Selon une autre caractéristique de l'invention, le palier est monté à l'intérieur d'un alésage intérieur du moyeu comportant une rainure circulaire dans laquelle est monté un anneau d'arrêt circulaire, en appui contre la face latérale extérieure de la bague extérieure du palier de roulement.

Selon une autre caractéristique de l'invention, l'épaisseur, selon l'axe, de la partie de l'anneau d'arrêt située à l'intérieur de la rainure circulaire, est inférieure à l'épaisseur, selon l'axe, de ladite rainure.

Selon une autre caractéristique de l'invention, la différence d'épaisseur, selon l'axe, entre la rainure et la partie de l'anneau d'arrêt située à l'intérieur de ladite rainure circulaire, est égale au décalage axial introduit, entre le porte-fusée et la bague intérieure du palier de roulement, par les moyens de fixation de l'élément capteur sur le porte fusée.

Ces caractéristiques permettent d'utiliser la rainure circulaire, existante sur l'alésage intérieur d'un moyeu classique, pour la fixation axiale du palier selon l'invention à l'aide d'un anneau d'arrêt.

Selon une autre caractéristique de l'invention, l'anneau d'arrêt circulaire se prolonge hors de la rainure circulaire, en direction de l'extérieur de la roue, le long de l'alésage intérieur du moyeu, par une partie annulaire conférant audit anneau une section globale radiale en forme de « L ».

Selon une autre caractéristique de l'invention, la longueur, selon l'axe, de la partie annulaire est au moins égale à l'épaisseur de l'extension radiale de l'armature.

Ces caractéristiques permettent d'assurer une fixation axiale correcte du palier malgré la diminution de la largeur disponible, au sein de la rainure circulaire, pour le montage d'un anneau d'arrêt.

D'autres caractéristiques et avantages apparaîtront à la lecture de la description d'un exemple de dispositif selon l'invention, en référence aux dessins dans lesquels :
- la figure 1 est une vue en coupe d'un montage de roue non motrice comportant un moyeu de roue selon l'invention,
- la figure 2 est un agrandissement de la figure 1 représentant le dispositif de mesure de vitesse du palier selon l'invention,
- la figure 3 est une vue en coupe axiale du joint d'étanchéité du palier selon l'invention,
- la figure 4 est un agrandissement de la figure 1 représentant le segment d'arrêt selon l'invention.

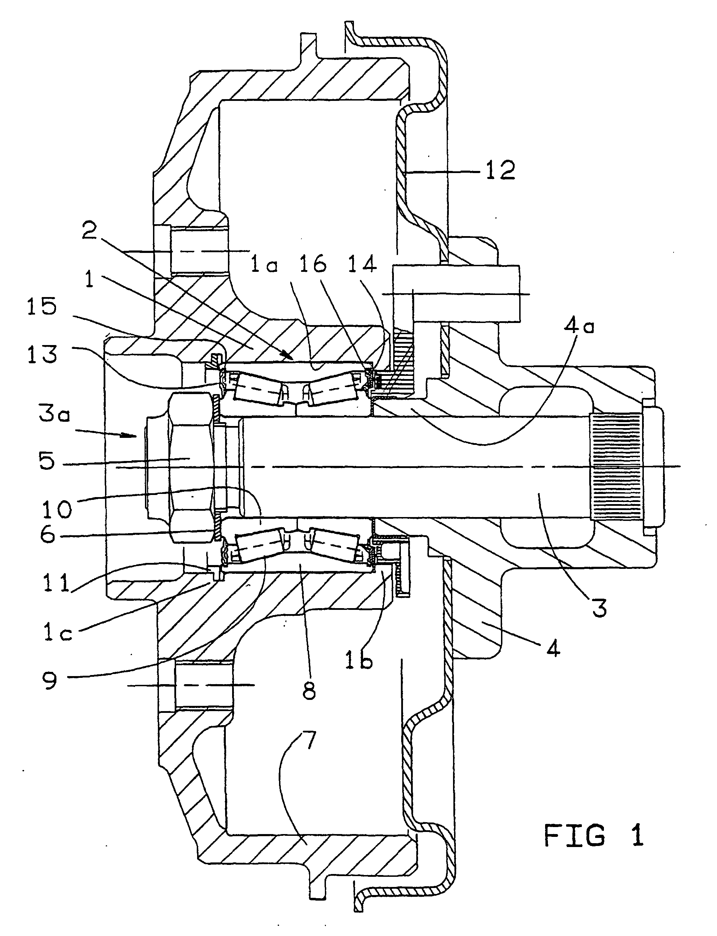

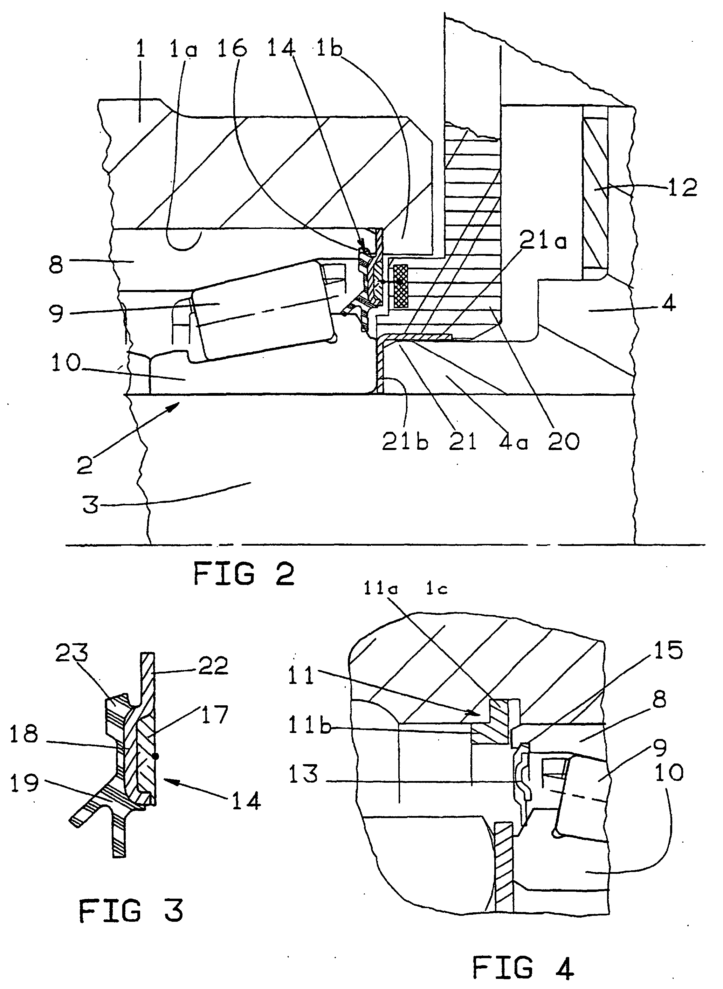

La figure 1 représente un moyeu 1 de roue non motrice d'un véhicule automobile. Le moyeu 1 est monté, par l'intermédiaire d'un palier 2 logé dans un alésage intérieur 1a dudit moyeu 1, autour d'une fusée 3 et en appui contre un porte-fusée 4. Un boulon 5, vissé à l'extrémité 3a extérieure de la fusée 3, assure le maintien du palier 2 par l'intermédiaire d'une rondelle 6 de mise en précharge dudit palier 2. Le moyeu 1 se prolonge en direction radiale par un tambour de frein 7. Le palier 2 est constitué d'une bague extérieure 8 montée, par l'intermédiaire de corps roulants 9, autour de deux bagues intérieures 10. Le moyeu 1 est en appui, en direction de l'extérieur du véhicule, contre une face latérale de la bague extérieure 8 du palier 2, par l'épaulement 1b délimitant axialement l'alésage la, en direction de l'intérieur du véhicule. De plus, le moyeu 1 est bloqué axialement, en direction de l'extérieur du véhicule, par un anneau d'arrêt 11 circulaire, monté dans une rainure circulaire 1c usinée dans l'alésage 1a. Un plateau de frein 12, sur lequel sont montés les différents éléments du dispositif de freinage (non représentés sur les figures) est fixé sur le porte-fusée 4. L'étanchéité du palier 2 est assurée par des joints d'étanchéité 13 et 14 montés sur chaque face dudit palier 2 à l'intérieur de gorges 15 et 16 prévues sur la face intérieure de la bague extérieure 8, d'une manière connue en soi. Le joint 14 disposé du côté de l'intérieur de la roue et qui est représenté sur les figures 2 et 3, est équipé d'un codeur magnétique 17 tel que décrit par exemple dans la publication FR2700588. Le joint 14 comporte une armature 18, par exemple métallique, sur laquelle sont surmoulés, d'une part une garniture d'étanchéité 19 et, d'autre part, le codeur magnétique 17. Ce dernier coopère avec un bloc capteur 20 fixé sur le porte-fusée 4 par l'intermédiaire d'un support 21 constituée d'une partie tubulaire 21a emmanchée autour de l'extrémité extérieure 4a du porte-fusée 4 et d'une couronne 21b prolongeant radialement ladite partie tubulaire 21a pour venir recouvrir l'extrémité extérieure 4a dudit porte-fusée 4 jusqu'à la fusée 3: Cette couronne 21b introduit un décalage, vers l'extérieur du véhicule, de la position axiale du palier 2 d'une valeur égale à l'épaisseur de ladite couronne 21b. De manière à rattraper ce décalage qui écarte vers l'extérieur du véhicule, le palier 2, et par suite, le moyeu 1, en appui sur la bague extérieure 8 dudit palier 2 par son épaulement 1b, sans pour autant avoir recours à un palier à bagues de roulement dissymétriques, l'armature 18 du joint 14 comporte une extension radiale 22 qui s'étend le long de la face latérale de la bague extérieure 8. Cette extension radiale 22, qui se trouve donc pincée entre ladite face latérale de la bague extérieure 8 et l'épaulement 1b, est choisie avec une épaisseur égale à celle de la couronne 21b, assurant ainsi le rattrapage du décalage axial et le bon positionnement du moyeu 1. Le joint 14 est fixé sur le palier 2 par sa garniture d'étanchéité 19 qui vient s'emboîter, par l'intermédiaire de son talon 23 dans la rainure 16 de la bague extérieure 8. Le décalage introduit par l'épaisseur de la couronne 21b et de l'extension radiale 22 de l'armature 18 provoque un décalage, en direction de l'extérieur, du palier 2. Bien évidemment, et afin que le montage soit encore possible sans usinage d'une nouvelle rainure, il est nécessaire que l'épaisseur de la couronne 21b, et donc de l'extension radiale 22 soit inférieure à l'épaisseur selon l'axe de la rainure 1c. La face latérale de la bague extérieure 8 déborde maintenant au dessus de la rainure circulaire 1c. L'épaisseur de la partie 11a de l'anneau d'arrêt 11 circulaire enfoncée dans la rainure 1c est limitée à la largeur de ladite rainure 1c diminuée de l'épaisseur de la couronne 21b. Aussi, selon une variante particulière de l'invention permettant de ne pas modifier le moyeu 1 tout en assurant un arrêt axial suffisant, la partie 11a de l'anneau d'arrêt 11 circulaire se prolonge, hors de la rainure 1c, en direction de l'extérieur de la roue, le long de l'alésage 1a intérieur du moyeu 1, par une partie annulaire 11b conférant audit anneau 11 une section globale radiale en forme de « L », comme il est représenté sur la figure 4. La longueur, selon l'axe, de cette partie annulaire 11b sera choisie au moins égale à l'épaisseur de la couronne 21b.

Bien entendu, l'invention n'est nullement limitée au mode de réalisation décrit et illustré qui n'a été donné qu'à titre d'exemple. En particulier, tout palier dont le joint d'étanchéité présente une extension radiale venant compenser l'épaisseur du dispositif de fixation de l'élément capteur sur le porte-fusée ne sortirait pas du cadre de l'invention, quelle que soit la forme de cette extension ou de ce dispositif de fixation. De même, on pourra fixer ce palier à l'intérieur du moyeu à l'aide d'un moyen autre que la rainure circulaire qui y existe déjà, sans pour autant sortir du cadre de l'invention.

## Revendications

1. Moyeu (1) de roue monté, par l'intermédiaire d'un palier (2) de roulement autour d'une fusée (3) et en appui contre un porte fusée (4), le palier (2) étant constitué d'une bague extérieure (8) montée, par l'intermédiaire de corps roulants (9) autour d'une bague intérieure (10), l'un des joints d'étanchéité (14), qui assurent l'étanchéité du palier (2), intégrant un élément codeur (17) solidaire en rotation de la bague tournante (8) et coopérant avec un élément capteur (20), ledit élément capteur (20) étant fixé sur le porte fusée (4), par l'intermédiaire de moyens de fixation (21), **caractérisé en ce que** le joint d'étanchéité (14) intégrant l'élément codeur (17) comporte une armature (18) qui possède une extension radiale (22) s'étendant le long de la face latérale de la bague tournante (8) du palier (2) et **en ce que** l'épaisseur, selon l'axe du palier (2), de l'extension radiale (22) de l'armature (18) du joint d'étanchéité (14) intégrant l'élément codeur (17), est égale au décalage axial introduit entre le porte fusée (4) et la bague intérieure (10) du palier (2) de roulement, par les moyens de fixation (21) de l'élément capteur (20) sur le porte fusée (4).

2. Moyeu (1) de roue selon la revendication précédente **caractérisé en ce que** le palier (2) est monté à l'intérieur d'un alésage intérieur (1a) du moyeu (1) comportant une rainure circulaire (1c) dans laquelle est monté un anneau d'arrêt (11) circulaire, en appui contre la face latérale extérieure de la bague extérieure (8) du palier (2) de roulement.

3. Moyeu (1) de roue selon la revendication précédente **caractérisé en ce que** l'anneau d'arrêt (11) circulaire se prolonge hors de la rainure circulaire (1c), en direction de l'extérieur de la roue, le long de l'alésage intérieur (1a) du moyeu, par une partie annulaire (11b) conférant audit anneau (11) une section globale radiale en forme de « L ».

4. Moyeu (1) de roue selon la revendication précédente **caractérisé en ce que** la longueur, selon l'axe, de la partie annulaire (11b) est au moins égale à l'épaisseur de l'extension radiale (22) de l'armature (18).

5. Moyeu (1) de roue selon l'une quelconque des revendications 2 à 4 **caractérisé en ce que** l'épaisseur, selon l'axe, de la partie (11a) de l'anneau d'arrêt (11) située à l'intérieur de la rainure circulaire (1c), est inférieure à l'épaisseur, selon l'axe, de ladite rainure (1c).

6. Moyeu (1) de roue selon la revendication précédente **caractérisé en ce que** la différence d'épaisseur, selon l'axe, entre la rainure (1c) et la partie (11a) de l'anneau d'arrêt (11) située à l'intérieur de ladite rainure circulaire (1c), est égale au décalage axial introduit, entre le porte-fusée (4) et la bague intérieure (10) du palier (2) de roulement, par les moyens de fixation (21) de l'élément capteur (20) sur le porte fusée (4).

## Patentansprüche

1. Radnabe (1), welche über ein Wälzlager (2) um eine Spindel (3) und in Anlage gegen einen Spindelträger (4) montiert ist, wobei das Lager (2) aus einem äußeren Ring (8) gebildet wird, der über Rollkörper (9) um einen inneren Ring (10) montiert ist, wobei die eine der Dichtungen (14), welche die Dichtigkeit des Lagers (2) sicherstellen, ein Kodierteil (17) integriert, das in Drehung fest mit dem drehenden Ring (8) verbunden ist, und mit einem Sensorelement (20) zusammenwirkt, wobei das Sensorelement (20) an dem Spindelträger (4) mittels Befestigungsmitteln (21) befestigt ist,
**dadurch gekennzeichnet, dass**
die Dichtung (14), welche das Kodierelement (17) integriert, ein Beschlagteil (18) aufweist, welches eine radiale Erweiterung (22) besitzt, die sich entlang der seitlichen Fläche des drehenden Rings (8) des Lagers (2) erstreckt, und dass die Dicke gemäß der Lagerachse (2) der radialen Erweiterung (22) des Beschlagteils (18) der Dichtung (14), die das Kodierelement (17) integriert, gleich ist zu der axialen Verlagerung, welche zwischen dem Spindelträger (4) und dem inneren Ring (10) des Wälzlagers (2) durch die Befestigungsmittel (21) des Sensorelements (20) an dem Spindelträger (4) aufgebracht wird.

2. Radnabe (1) gemäß dem vorherigen Anspruch, **dadurch gekennzeichnet, dass** das Lager (2) im Inneren einer inneren Bohrung (1a) der Nabe (1) montiert ist, welche eine kreisförmige Nut (1c) aufweist, in welche eine kreisförmige Anschlagscheibe (11) montiert ist, in Anlage gegen die seitliche, äußere Fläche des äußeren Rings (8) des Wälzlagers (2).

3. Radnabe (1) gemäß dem vorherigen Anspruch, **dadurch gekennzeichnet, dass** die kreisförmige Anschlagscheibe (11) über die kreisförmige Nut (1c) in Richtung der Außenseite des Rads verlängert ist, entlang der inneren Bohrung (1a) der Nabe, durch einen ringförmigen Teil (11b), wobei er dem Ring (11) einen radialen Querschnitt im Allgemeinen in L-Form bietet.

4. Radnabe (1) gemäß dem vorherigen Anspruch, **dadurch gekennzeichnet, dass** die Länge gemäß der Achse des ringförmigen Teils (1b) mindestens gleich der Dicke der radialen Erweiterung (22) des Beschlagteils (18) ist.

5. Radnabe (1) gemäß irgendeinem der Ansprüche 2 bis 4, **dadurch gekennzeichnet, dass** die Dicke, gemäß der Achse, des Teils (11a) der Anschlagscheibe (11), welches im Innern der kreisförmigen Nut (1c) angeordnet ist, geringer ist als die Dicke gemäß der Achse der Nut (1c).

6. Radnabe (1) gemäß dem vorherigen Anspruch, **dadurch gekennzeichnet, dass** der Unterschied der Dicke, gemäß der Achse, zwischen der Nut (1c) und dem Teil (11a) der Anschlagscheibe (11), welches im Innern der kreisförmigen Nut (1c) angeordnet ist, gleich der aufgebrachten, axialen Verlagerung zwischen dem Spindelträger (4) und dem inneren Ring (10) des Wälzlagers (2) durch die Befestigungsmittel (21) des Sensorelements (20) an dem Spindelträger (4) ist.

## Claims

1. A wheel hub (1) mounted, by means of a rolling bearing (2) about a steering knuckle (3) and bearing against a steering knuckle pin (4), the bearing (2) being constituted by an external ring (8) mounted, by means of rolling bodies (9), about an internal ring (10), one of the sealing joints (14) which provide the sealing of the bearing (2) integrating a coding element (17) interdependent in its rotation with the rotary ring (8), and co-operating with a sensor element (20), said sensor element (20) being fixed on the steering knuckle pin (4) by means of fixing means (21), **characterised in that** the sealing joint (14) integrating the coding element (17) comprises an armature (18) which has a radial extension (22) extending along the lateral face of the rotary ring (8) of the bearing (2), and **in that** the thickness, according to the axis of the bearing (2), of the radial extension (22) of the armature (18) of the sealing joint (14) integrating the coding element (17) is equal to the axial displacement introduced between the steering knuckle pin (4) and the internal ring (10) of the rolling bearing (2) by the means (21) for fixing the sensor element (20) on the steering knuckle pin (4).

2. Wheel hub (1) according to the preceding claim, **characterised in that** the bearing (2) is mounted inside an internal bore (1a) of the hub (1), comprising a circular groove (1c) in which a circular locking ring (11) is mounted, bearing against the external lateral face (8) of the rolling bearing (2).

3. Wheel hub (1) according to the preceding claim, **characterised in that** the circular locking ring (11) extends outside the circular groove (1c) towards the outside of the wheel, along the internal bore (1a) of the hub by an annular part (11b) providing said ring (11) with an overall radial section in the shape of an "L".

4. Wheel hub (1) according to the preceding claim, **characterised in that** the length, according to the axis, of the annular part (11b) is at least equal to the thickness of the radial extension (22) of the armature (18).

5. Wheel hub (1) according to any one of claims 2 to 4, **characterised in that** the thickness, according to the axis, of the part (11a) of the locking ring (11) located inside the circular groove (1c), is less than the thickness, according to the axis, of said groove (1c).

6. Wheel hub (1) according to the preceding claim, **characterised in that** the difference in thickness, according to the axis, between the groove (1c) and the part (11a) of the locking ring (11) located inside said circular groove (1c) is equal to the axial displacement introduced between the steering knuckle pin (4) and the internal ring (10) of the rolling bearing (2) by the means (21) for fixing the sensor element (20) on the steering knuckle pin (4).
